# FASCICULE DE BREVET EUROPEEN

(11) **EP 3 642 558 B1**
(45) Date de publication et mention de la délivrance du brevet: **30.09.2020**
(21) Numéro de dépôt: 19774135.8
(22) Date de dépôt: 23.08.2019
(51) Int. Cl.: G01B 11/04, G01B 11/10, G01B 11/24, G01B 21/04, C25C 3/06, C25C 3/10, C25C 3/20, B66C 13/46

(54) **INSTALLATION DE PRODUCTION D'ALUMINIUM PAR ÉLECTROLYSE COMPRENANT UN SYSTÈME DE CARACTÉRISATION D'UNE GÉOMÉTRIE D'UNE CHARGE SUSPENDUE ET PROCÉDÉ CORRESPONDANT**
ANLAGE ZUR HERSTELLUNG VON ALUMINIUM DURCH ELEKTROLYSE MIT EINEM SYSTEM ZUR CHARAKTERISIERUNG EINER GEOMETRIE EINER HÄNGENDEN LAST, UND KORRESPONDIERENDES VERFAHREN
FACILITY FOR PRODUCING ALUMINIUM BY ELECTROLYSIS COMPRISING A SYSTEM FOR CHARACTERISING A GEOMETRY OF A SUSPENDED LOAD AND CORRESPONDING METHOD

(30) Priorité: 23.08.2018 FR 1857628
(43) Date de publication de la demande: 29.04.2020
(73) Titulaire: FIVES ECL, 59790 Ronchin (FR)
(72) Inventeur: BOYER, Vianney, 59790 Ronchin (FR); GEORGEL, Sylvain, 59790 Ronchin (FR)
(74) Mandataire: Plasseraud IP
(86) Numéro de dépôt international: PCT/FR2019/051954
(87) Numéro de publication internationale: WO 2020/039150

(56) Documents cités:
- WO-A1-2009/070477
- WO-A1-2016/078841
- WO-A2-2007/141412
- AU-A1- 2008 211 999
- CN-U- 205 843 607

## Description

L'invention concerne le domaine des charges suspendues pour lesquelles on souhaite obtenir des informations sur leurs géométries, notamment pour effectuer des mesures de dimensions sur les charges. Plus spécifiquement, l'invention concerne des électrodes utilisées pour la production d'aluminium par électrolyse.

La production industrielle d'aluminium à partir d'alumine par le procédé Hall-Héroult est une technique bien connue. De manière générale, elle est réalisée au sein d'une installation d'électrolyse comprenant un hall, dans lequel une pluralité de cuves d'électrolyse est installée. Chaque cuve est emplie d'un bain électrolytique comprenant notamment de la cryolite dans lequel l'alumine est dissoute. Des anodes précuites en carbone sont partiellement immergées dans le bain électrolytique. Les anodes sont alimentées en courant qui traverse le bain jusqu'à une cathode formée en général au fond de la cuve. Le document FR 2 806 742 décrit un exemple d'une telle installation.

Les anodes sont consommées lors de la réaction d'électrolyse, et sont changées régulièrement. Typiquement, les anodes sont scellées sur une tige en acier dans un atelier de scellement. Plus précisément, la tige est munie à une extrémité de rondins qui s'insèrent dans des creux sur une face de l'anode. De la fonte coulée assure le scellement des rondins dans l'anode. Puis, les anodes sont transférées de l'atelier de scellement au hall d'électrolyse et sont plongées dans une cuve. Une fois l'anode consommée, elle est retirée de la cuve en soulevant la tige. Puis, l'anode consommée peut être emmenée dans un atelier de nettoyage afin de retirer les restes du bain électrolytique qui se seraient accrochés à l'anode usée. Enfin, la tige est descellée. La tige peut être réutilisée avec une nouvelle anode, et le résidu d'anode usée peut être broyé pour être recyclé.

Tout au long du circuit de l'anode depuis l'atelier de scellement jusqu'au retrait du mégot de la tige, cette dernière est utilisée pour transporter l'anode. A cet effet, l'installation de production d'aluminium comprend typiquement un ou plusieurs convoyeurs aériens auxquels la tige est solidarisée, l'anode se retrouvant suspendue.

Les caractéristiques des anodes sont l'objet d'une surveillance. Ces caractéristiques sont surveillées avant l'entrée dans le bain électrolytique afin de garantir que les anodes présentent les propriétés requises pour assurer une électrolyse efficace. Elles sont également surveillées après la sortie du bain électrolytique, afin de vérifier par exemple les caractéristiques des restes de bain électrolytique accrochés aux anodes ou si les anodes ont été consommées selon des critères attendus, afin de déterminer par exemple si les conditions de l'électrolyse sont optimales. Une surveillance des anodes peut également être mise en œuvre pour vérifier si les restes de bain accrochés à l'anode ont été correctement nettoyés.

Une méthode pour surveiller les anodes consiste à acquérir une image des anodes afin d'en déterminer les caractéristiques géométriques notamment. Le document WO2009/070477 décrit un exemple d'une telle méthode. A cet effet, un système d'imagerie est mis en place sur la trajectoire des anodes dans une installation de production d'aluminium par électrolyse. Des mesures sont réalisées sur les images des anodes afin d'éventuellement ajuster les paramètres de fonctionnement des cellules d'électrolyse.

Cependant, ce document est muet quant à la façon dont les images sont acquises. Or, l'acquisition d'images dans une installation de production d'aluminium pose plusieurs problèmes. En particulier, la luminosité n'est pas optimale : les anodes contenant principalement du carbone absorbent la lumière. Sans contrôle de la luminosité, la qualité des images peut se révéler insuffisante pour réaliser la surveillance. A ce jour, afin de réaliser une image d'une anode avant ou après le bain électrolytique, il est connu d'amener les anodes dans une enceinte close équipée d'un système d'éclairage et d'un système de prise de vues, par exemple des caméras tridimensionnelles. L'anode est amenée jusque dans l'enceinte et la ou les prises de vue sont réalisées avec l'anode à l'arrêt.

Un inconvénient de cette solution est que les anodes sont arrêtées pour réaliser la ou les prises de vue, de sorte que le flux de circulation des anodes est interrompu, ralentissant le débit des anodes.

Un autre inconvénient est que la mise en place d'une telle enceinte pose des problèmes d'encombrement, de sorte qu'il n'est pas toujours aisé de la placer sur la trajectoire des anodes, et peut requérir de détourner la trajectoire des anodes, compliquant le système de convoyage et donc augmentant les coûts de l'installation. En outre, il n'est même pas toujours possible d'installer de telles enceintes dans une installation de production d'aluminium préexistante qui n'a pas la place déjà prévue à cet effet. Lorsque la surveillance à plusieurs endroits est requise, l'installation de telles enceintes est d'autant plus problématique.

Des problèmes similaires pour réaliser des images des rondins se posent. En effet, une tige étant réutilisée pour plusieurs anodes, l'état des rondins peut également faire l'objet d'une surveillance après le descellement d'une anode usée et/ou avant le scellement d'une nouvelle anode, afin d'anticiper le remplacement de la tige et améliorer la gestion des stocks de tiges.

WO2007/141412 A2 et AU 2008 211 999 A1 concernent des installations pour l'inspection d'anodes suspendues, lesdites installations ne surmontant pas tout ou partie des inconvénients précités. WO2016/078841 A1 décrit une méthode de caractérisation de la surface d'un objet sur un support en rotation avec assemblage d'images, une orientation de chaque image étant déterminée avant assemblage en mesurant une variation d'inclinaison de l'objet par rapport au référentiel d'image.

Il existe donc un besoin pour un système permettant d'obtenir des informations sur la géométrie des anodes et/ou des rondins, et plus généralement sur une charge suspendue en mouvement, surmontant notamment les inconvénients précités.

A cet effet, un premier objet de l'invention est de proposer un système de caractérisation d'une charge en mouvement permettant de caractériser la charge pendant son mouvement.

Un deuxième objet de l'invention est de proposer un système de caractérisation d'une charge en mouvement permettant d'effectuer des mesures avec une précision élevée.

Un troisième objet de l'invention est de proposer un système de caractérisation d'une charge en mouvement ne nécessitant pas la mise en place d'un contrôle de la luminosité.

Un quatrième objet de l'invention est de proposer un système de caractérisation d'une charge en mouvement adapté à une utilisation sur une anode ou une tige de suspension d'une anode pour la production d'aluminium par électrolyse.

Un cinquième objet de l'invention est de proposer un système de caractérisation d'une charge en mouvement applicable au domaine de la production d'aluminium n'augmentant pas ou peu les coûts de production de l'aluminium.

Un sixième objet de l'invention est de proposer un système de caractérisation d'une charge en mouvement applicable au domaine de la production d'aluminium permettant d'améliorer le fonctionnement de l'installation de production d'aluminium.

La charge en mouvement est suspendue à un dispositif de liaison d'un moyen de déplacement de ladite charge, par exemple un convoyeur aérien. Le dispositif de liaison peut être un chariot. Par commodité, la description de l'invention va être réalisée avec un chariot comme dispositif de liaison étant entendu qu'elle est transposable à tout autre dispositif de liaison.

Ainsi, selon un premier aspect, l'invention propose un système de caractérisation d'une géométrie d'une charge suspendue au moyen d'une tige à un chariot. Le chariot est en mouvement, c'est-à-dire que le système de caractérisation a pour but d'être mis en œuvre lorsque le chariot est en train de se déplacer, la charge étant en défilement par rapport au système. L'installation selon l'invention comprend un système comprenant:
- au moins un capteur de géométrie présentant un champ de vision dans lequel la charge est apte à défiler par le mouvement du chariot, le champ de vision du capteur de géométrie étant apte à englober une portion de la charge à un instant donné de manière à fournir une image de la géométrie de la portion à l'instant donné ;
- un système configuré pour déterminer le ballant de la tige et/ou de la charge ;
- un correcteur configuré pour corriger, à l'instant donné, l'image de la géométrie de la portion de la charge corrigée par le ballant correspondant, de manière à définir l'image de la géométrie de la portion dans un référentiel de référence, indépendant du ballant ;
- un système configuré pour reconstruire la géométrie d'au moins une partie de la charge dans le référentiel de référence, à partir de l'image de la géométrie corrigée d'au moins deux portions de la charge à deux instants donnés,
l'installation comprenant un ensemble de convoyage de charges sur un convoyeur aérien comprenant un dispositif de liaison tel que la charge peut être suspendue audit dispositif de liaison par une tige.

Le système permet ainsi, en tenant compte du ballant, de reconstruire la géométrie de la charge en mouvement, dans un procédé impliquant le transport de la charge, sans devoir stopper le déplacement de la charge pour réaliser la reconstruction géométrique, tout en ayant une précision élevée.

Selon un mode de réalisation, le système peut comprendre au moins deux capteurs de géométrie, et de préférence au moins trois capteurs de géométrie. Le champ de vision de chaque capteur de géométrie est alors apte à englober une portion de la charge à un instant donné. En outre, le champ de vision de chaque capteur est distinct l'un de l'autre au moins en partie. Par exemple, dans le cas d'une charge parallélépipédique, comme une anode pour la production d'aluminium par électrolyse, les trois capteurs de géométrie peuvent être disposés de manière à ce que chacun de leur champ de vision englobe deux faces de l'anode, le système étant ainsi adapté pour reconstruire en trois dimensions l'anode.

Selon un mode de réalisation, le ou les capteurs de géométrie sont des capteurs bidimensionnels, de type par exemple laser à balayage.

Selon un mode de réalisation, le ou les capteurs de géométrie sont des capteurs tridimensionnels.

Selon un mode de réalisation, le système peut comprendre en outre un capteur de couleurs, permettant d'ajouter des informations de couleurs aux informations géométriques issues de la reconstruction géométriques. Les informations de couleurs peuvent permettre notamment d'effectuer des analyses colorimétriques sur les matériaux de la charge.

Selon un mode de réalisation, le système de détermination du ballant comprend au moins un capteur de position d'au moins un premier point de la tige dans un premier référentiel et d'au moins un second point, distinct du premier point, de la tige dans un deuxième référentiel. Le premier point et le deuxième point sont décalés l'un de l'autre dans la direction d'extension de la tige. Le correcteur ramène alors les deux points de la tige dans le référentiel de référence, lequel est fixe par rapport au capteur de position.

Selon un mode de réalisation, le au moins un capteur de position est apte à déterminer la position du chariot, la position du premier point étant déterminée par la position du chariot. Le système de détermination du ballant s'en trouve ainsi simplifier.

De préférence, le au moins un capteur de position est un capteur bidimensionnel, plus simple à mettre en œuvre et moins coûteux que deux capteurs distincts.

Selon un deuxième aspect, l'invention propose un procédé de détermination d'une géométrie d'une charge suspendue au moyen d'une tige à un chariot en mouvement à l'aide d'un système de caractérisation d'une installation tel que présenté ci-dessus. La charge est en défilement vis-à-vis du système de détermination. Le procédé comprend :
- l'enregistrement d'au moins une image de la géométrie d'une première portion de la charge ;
- la mesure du ballant de la charge ;
- la correction de l'image de la géométrie enregistrée par le ballant afin d'obtenir l'image de la géométrie de la première portion de la charge dans un référentiel de référence, indépendant du ballant ;
- répétition des étapes de détection, de mesure et de correction pour au moins une deuxième portion de la charge ;
- la reconstruction d'une image de la géométrie d'au moins une partie de la charge à partir des images de la géométrie pour les deux portions de la charge ramenées dans le référentiel de référence.

Selon un mode de réalisation, l'étape de reconstruction est réalisée pour l'ensemble de la charge à partir d'une pluralité d'images de la géométrie pour une pluralité de portions de la charge couvrant l'ensemble de la charge.

Selon un mode de réalisation, l'installation de production d'aluminium par électrolyse tel que présenté ci-dessus comprend un ensemble de convoyage de charges par déplacement de chariots sur un convoyeur aérien, les charges étant suspendues aux chariots par des tiges.

Selon un mode de réalisation, la charge peut comprendre au moins un bloc carboné pour l'électrolyse de l'aluminium. En variante ou en combinaison, la charge peut comprendre des rondins de scellement pour au moins un bloc carboné utilisé pour l'électrolyse de l'aluminium.

D'autres effets et avantages de l'invention apparaîtront à la lumière de la description de modes de réalisation accompagnée des figures dans lesquelles :
La figure 1 est une représentation schématique d'un exemple d'une installation de production d'aluminium.

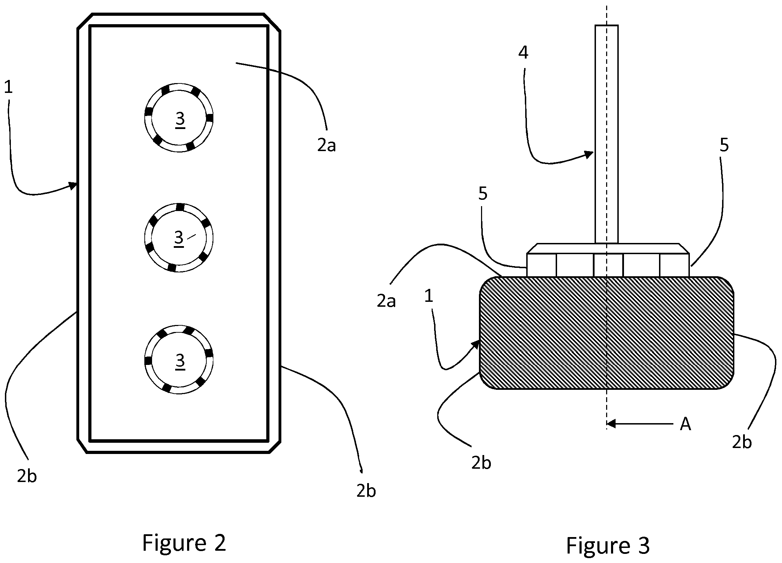

La figure 2 est une représentation schématique d'une anode vue de dessus pour la production d'aluminium.
La figure 3 est une représentation schématique d'une anode neuve vue de côté pour la production d'aluminium, l'anode étant scellée sur une tige.

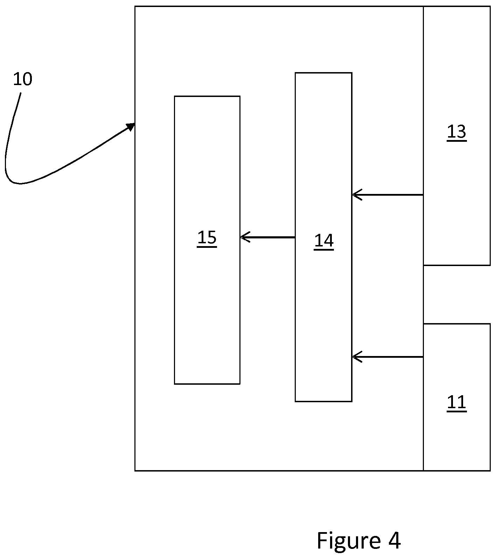

La figure 4 est une représentation schématique d'un exemple de réalisation d'un système de caractérisation de la géométrie d'une charge suspendue.
Les figures 5 et 6 sont des représentations schématiques du système de caractérisation de la figure 4 en interaction avec une anode suspendue par une tige à un chariot en mouvement d'un convoyeur aérien.
La figure 7 est une représentation schématique d'une anode usée suspendue par une tige à un chariot en mouvement d'un convoyeur aérien.

La description qui suit s'attache à l'exemple des anodes pour la production d'aluminium par électrolyse, étant entendu qu'elle est transposable à toute charge suspendue en mouvement.

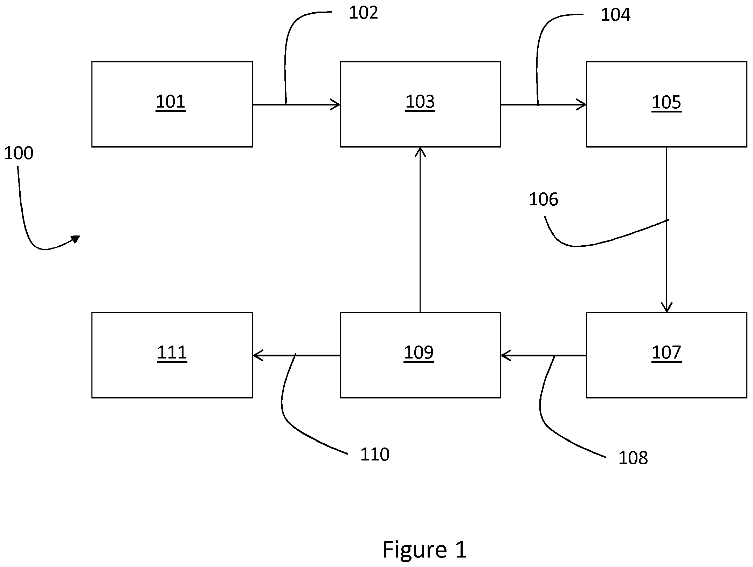

Sur la figure 1, il est représenté de manière schématique le parcours d'une anode au sein d'une installation **100** de production d'aluminium par électrolyse. L'installation comprend notamment une zone **101** de stockage où les anodes, après avoir été formées puis cuites, peuvent être stockées. Un convoyeur **102** permet d'amener les anodes dans un atelier **103** de scellement, où elles sont scellées sur une tige en matériau électriquement conducteur. Une tige peut être scellée à une unique anode, ou à deux anodes, ou plus. Dans ce qui suit, on garde l'exemple dans lequel une tige est scellée à une unique anode. L'anode scellée à la tige est ensuite convoyée par un convoyeur **104** aérien jusqu'à un hall **105** d'électrolyse, où elle est plongée dans un bain électrolytique. L'anode usée est ensuite extraite du bain, puis est convoyée par un convoyeur **106** aérien jusqu'à une zone **107** de nettoyage, où les restes de bain électrolytique durcis et accrochés à l'anode usée sont retirés, par exemple par raclage puis grenaillage. L'anode usée et nettoyée est alors convoyée par un convoyeur **108** aérien à un atelier **109** de descellement, où elle est descellée de la tige. La tige peut être renvoyée à l'atelier 103 de scellement pour être scellée sur une nouvelle anode, avec éventuellement une étape intermédiaire de nettoyage pour retirer les restes de bain électrolytique et/ou d'anode, ou être envoyée en rebus si son état est trop dégradée. Les restes d'anode usée sont enfin amenés par un convoyeur **110** dans une zone **111** de recyclage, où ils sont par exemple broyés pour être réutilisés dans la fabrication de nouvelles anodes.

Depuis l'atelier 103 de scellement jusqu'à l'atelier 109 de descellement, l'anode est convoyée par convoyeur aérien, suspendue à la tige.

Plus précisément, l'anode 1, lorsqu'elle est neuve, se présente sous la forme d'un bloc parallélépipédique. Elle est typiquement formée par vibrotassage d'un mélange comprenant du brai et du coke dans un moule, puis est cuite dans un four. Dans une surface **2a** de l'anode 1, appelée surface supérieure, des creux **3** sont formés. L'anode 1 est scellée à une tige **4,** typiquement en aluminium, en insérant des rondins **5,** typiquement en acier, d'une tige 4 dans les creux 3 de l'anode 1 et en y déversant de la fonte. En refroidissant, la fonte assure la liaison rigide entre l'anode 1 et la tige 4.

La tige 4 est montée par des moyens connus sur un chariot d'un convoyeur aérien, permettant de déplacer la tige 4 et l'anode 1 au sein de l'installation 100. La tige 4 s'étend selon une direction **A** d'extension.

Afin de déterminer la géométrie de l'anode 1, l'installation 100 comprend un système **10** de caractérisation d'une géométrie d'une charge suspendue permettant d'obtenir des informations sous forme numérique quant à la géométrie de l'anode 1.

L'anode 1 étant suspendue au chariot, on définit pour des raisons de clarté pour la suite de la description une direction verticale, correspondant à la direction verticale naturelle de la force de gravité, toute direction horizontale étant par conséquent perpendiculaire à la direction verticale.

Comme expliqué précédemment en introduction, il n'est pas souhaitable d'arrêter l'anode pour obtenir les informations de géométrie. Cependant, les mouvements de l'anode peuvent être complexes. En effet, il y a d'abord le mouvement général de l'anode 1 suivant la trajectoire du chariot convoyant l'anode 1 et la tige 4. L'inertie de l'anode 1 entraînée par ce mouvement général, mais également les éventuelles vibrations et secousses du chariot, provoquent un deuxième mouvement de balancement, appelé ballant, autour d'un axe sensiblement horizontal passant par un point d'accrochage de la tige 4 sur le chariot, de sorte que la direction A d'extension de la tige 4, qui est sensiblement verticale lorsque le chariot est immobile, s'écarte de la direction verticale.

Plus précisément, le ballant est le résultat d'un balancement autour d'un premier axe horizontal sensiblement transversal à la direction de déplacement par convoyage de l'anode 1 et d'un balancement autour d'un deuxième axe horizontal sensiblement parallèle à la direction de déplacement par convoyage de l'anode 1, ces deux balancements ayant potentiellement des fréquences différentes l'un de l'autre, et ayant chacun des fréquences qui peuvent varier dans le temps. Il en résulte que le ballant et son évolution dans le temps sont difficilement prévisibles. Ils requièrent notamment une connaissance de la vitesse de déplacement et de l'accélération du chariot, de la masse de l'ensemble suspendu, de la dimension et de la masse de la tige, qui sont des paramètres qui peuvent varier d'une anode à l'autre et qui peuvent varier dans le temps. Obtenir ces paramètres peut s'avérer fastidieux et coûteux.

Le système 10 de caractérisation permet alors de tenir compte des mouvements de l'anode pour obtenir les informations sur la géométrie de l'anode 1, sans arrêter les mouvements de l'anode 1.

A cet effet, le système 10 de caractérisation comprend au moins un capteur **11** de géométrie, c'est-à-dire un appareil permettant d'obtenir des informations sur la géométrie de l'anode 1. Plus précisément, le capteur 11 comprend un champ **12** de vision, c'est-à-dire une portion de l'espace définie à partir du capteur 11 de géométrie dans laquelle le capteur 11 est capable d'obtenir des images de la géométrie pour un objet dans cette portion de l'espace.

Par « image de la géométrie » on désigne ici toute information, de préférence sous forme numérique, relative à des caractéristiques géométriques de l'anode 1, notamment les formes, les dimensions et la présence de creux ou de bosses sur une surface. Une image peut par exemple être formée de pixels ou d'un nuage de points. Afin de réduire les problèmes liés à l'encombrement, le capteur 11 de géométrie est placé de sorte que seule une portion de l'anode 1 est englobée dans le champ 12 de vision à un instant donné, et de sorte que l'anode 1 défile dans le champ 12 de vision du capteur 11 de géométrie lorsqu'elle est convoyée, par son mouvement général. Ainsi, le capteur 11 de géométrie peut être placé plus près de l'anode 1 qu'un capteur qui nécessiterait que son champ de vision englobe l'anode en entier. L'installation du capteur 11 de géométrie s'en trouve simplifiée.

Plus précisément, le champ 12 de vision du capteur 11 de géométrie est incident sur au moins une portion de surface de l'anode 1. Le capteur 11 de géométrie est de préférence un capteur sans contact, comprenant un système optique, et est par exemple un capteur bidimensionnel, tel qu'un capteur par balayage laser, ou un capteur tridimensionnel.

Afin de tenir compte du ballant, le système 10 de caractérisation comprend de plus un système **13** de détermination du ballant de la tige 4 et/ou de l'anode 1, dans un référentiel fixe par rapport au système 13 de détermination du ballant.

De préférence, le capteur 11 de géométrie et le système 13 de détermination du ballant sont montés fixes au sein de l'installation 100, par exemple sur un châssis posé au sol. Cependant, le capteur 11 de géométrie et/ou le système 13 de détermination de ballant peuvent être mobiles par rapport au sol de l'installation 100, auquel cas leurs mouvements sont connus afin de pouvoir caractériser la géométrie de l'anode 1 comme expliqué ci-dessous.

En effet, le capteur 11 de géométrie obtient des images de la géométrie pour plusieurs portions de l'anode. L'anode défilant dans le champ 12 de vision, chaque portion est donc passée dans le champ 12 de vision à un instant différent, et donc avec un ballant potentiellement différent. Pour associer les images de la géométrie de plusieurs portions d'une anode 1, il faut donc connaître le ballant correspondant à chaque image, et corriger chaque image par ce ballant. En d'autres termes, chaque image est prise dans un référentiel fixe par rapport au capteur 11 de géométrie. Or, l'anode 1 est mobile par rapport au capteur 11 de géométrie. Pour passer du référentiel fixe par rapport au capteur 11 de géométrie à un référentiel commun à chaque portion de l'anode 1, il faut donc connaître le ballant.

Une fois le ballant déterminé pour chaque image de la géométrie de chaque portion, un correcteur **14** peut corriger chaque image de la géométrie de chaque portion par le ballant, c'est-à-dire définir chaque image de la géométrie dans un référentiel dit de référence, indépendant du ballant, dans lequel le ballant est nul, quelle que soit sa valeur. Il s'agit par exemple d'un référentiel fixe par rapport à l'anode 1. En d'autres termes encore, le ballant provoquant un décalage des images prises à des instants différents est annulé par le correcteur 14.

Un système **15** de reconstruction de la géométrie associe ensuite chaque image de la géométrie dans le référentiel de référence afin de caractériser au moins en partie la géométrie de l'anode 1, et de préférence l'anode 1 dans sa globalité. De préférence, chaque image de la géométrie de chaque portion est par exemple horodatée, de sorte que le système 15 de reconstruction peut se baser sur le temps pour associer les images successives dans l'ordre correspondant. En variante, chaque image de la géométrie de chaque portion est numérotée, le numéro attribué s'incrémentant successivement d'une image de portion à une autre. Le système 15 de reconstruction peut alors se baser sur la numérotation pour associer les images successives dans l'ordre correspondant.

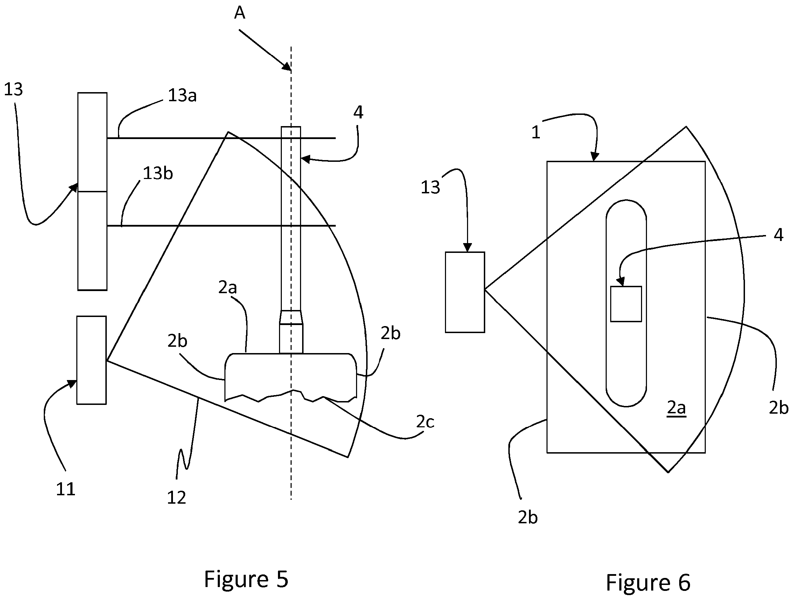

Il va maintenant être décrit un exemple de caractérisation de la géométrie d'une anode 1 usée, illustrée schématiquement sur les figures 5 à 7.

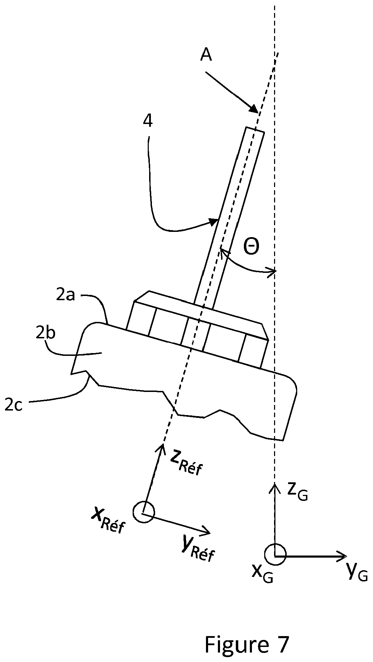

Selon cet exemple, le système 10 de caractérisation de géométrie comprend un capteur 11 de géométrie, incident uniquement sur une surface **2b** latérale de l'anode 1, comprise dans un plan vertical. L'anode 1 est une anode usée suite à son utilisation dans une cuve d'électrolyse, de sorte que la surface **2c** inférieure est irrégulière. L'anode 1 est toujours scellée sur la tige 4 et transportée par un convoyeur aérien. L'inertie de l'anode 1 et de la tige 4 induit un ballant, noté **Θ**, c'est-à-dire un angle entre la direction d'élongation de la tige 4 et la direction verticale, ou encore un angle de rotation de la tige 4 autour d'un axe horizontal passant par un point de connexion de la tige sur le chariot du convoyeur aérien. A des fins de simplification, dans l'exemple présenté, le ballant est considéré comme comprenant uniquement une composante dans la direction de convoyage de l'anode, c'est-à-dire dans le plan vertical sensiblement parallèle aux surfaces 2b latérales de l'anode, comme représenté sur la figure 7. En pratique, le ballant peut être compris dans tout plan vertical, c'est-à-dire comprendre une composante dans la direction de convoyage de l'anode, et une composante dans la direction transverse.

On souhaite alors obtenir des informations quant aux dimensions et à la forme de l'anode 1 usée.

Selon cet exemple, le capteur 11 de géométrie est un capteur bidimensionnel, à balayage laser, émettant un faisceau balayant l'espace verticalement et définissant le champ 12 de vision du capteur 11 de géométrie. Un tel capteur est peu coûteux et adapté à une mise en œuvre dans une installation 100 de production d'aluminium. Ainsi, à un instant donné, le capteur 11 de géométrie balaye une tranche verticale de l'anode 1, et plus précisément selon l'exemple balaye une ligne sensiblement verticale de la surface 2b latérale sur laquelle le faisceau est incident. Le temps de balayage du capteur 11 de géométrie est adapté à la vitesse des mouvements de l'anode, de sorte que la durée du balayage est négligeable et le balayage peut être considéré comme instantané. A titre d'exemple, la vitesse de déplacement de l'anode dans son mouvement global de convoyage par le chariot, est en moyenne de l'ordre de 200 mm/s (millimètres par seconde), tandis que la durée du balayage pour obtenir une image d'une portion de l'anode est de l'ordre de 750 µs (microsecondes).

La fréquence d'acquisition des images par le capteur 11 de géométrie est adaptée à la vitesse de déplacement de l'anode 1 et à la précision visée.

Selon cet exemple, l'image de la géométrie d'une portion de l'anode se présente sous la forme d'un nuage de points. Chaque nuage de points est déterminé dans le référentiel global du capteur 11 de géométrie, noté X_{G}, Y_{G} et Z_{G}. En prenant chaque image constituée des nuages de points et en les associant dans le référentiel global X_{G}, Y_{G} et Z_{G}, le ballant Θ n'étant pas nécessairement constant entre deux images successives car prises à deux instants différents, la reconstruction qui ne tient pas compte du ballant Θ ne permet pas d'obtenir des informations sur la géométrie de l'anode, les nuages de points n'étant pas calés angulairement les uns par rapport aux autres.

Les méthodes prédictives de reconstruction par recalage d'images successives, par exemple par la méthode des moindres carrés, ne sont pas adaptées car elles supposent de s'appuyer sur un modèle connu. Or, en particulier, l'usure d'une anode sur sa surface inférieure, ou encore la géométrie de l'anode usée sur laquelle des restes de bains sont accrochés ne peuvent pas être prédites par un modèle, ou en tout cas l'utilisation d'un modèle implique une perte dans la précision de la détermination de la géométrie.

Ainsi, le système 13 de détermination du ballant permet d'éviter d'utiliser les méthodes de recalage et de reconstruire directement l'anode 1 sans passer par un modèle.

Selon l'exemple présenté ici, le système 13 de détermination du ballant comprend deux capteurs de position, à balayage laser, et se base sur la trajectoire de la tige 4 pour déterminer le ballant Θ. Le système 13 de détermination du ballant se base sur la connaissance, à un instant donné, de la position d'au moins deux points de la tige 4, décalés l'un par rapport à l'autre dans la direction A d'extension de la tige 4. Ainsi, le système 13 de détermination émet un premier faisceau 13a d'un premier capteur de position et un deuxième faisceau 13b d'un deuxième capteur de position, les deux faisceaux 13a, 13b étant sensiblement horizontaux et décalés verticalement l'un par rapport à l'autre. Les deux faisceaux 13a, 13b sont incidents sur au moins une même face de la tige 4, en l'occurrence la face sensiblement parallèle à la direction de déplacement par convoyage de l'anode afin de déterminer le ballant autour de l'axe sensiblement transversal à cette direction. En d'autres termes, le système 13 de détermination détermine la trajectoire de la tige 4 en tenant compte du ballant Θ.

Le faisceau 13a, 13b de chaque capteur du système 13 de détermination du ballant Θ est suffisamment large pour englober au moins une face de la tige 4 pendant une durée adaptée pour déterminer le ballant et son évolution dans le temps pendant que l'anode défile devant le capteur 11 de géométrie. Par exemple, la dimension des champs de vision 13a, 13b permet d'englober la tige 4 pendant une durée inférieure à celle pendant laquelle l'anode 1 défile dans le champ 12 de vision de l'anode, mais une durée suffisante pour extrapoler le ballant à tout instant.

Les deux faisceaux 13a, 13b sont incidents sur chacune au moins une face de la tige 4, dans le plan vertical dans lequel on souhaite mesurer le ballant. Selon l'exemple, il s'agit de la même face de la tige, mais non nécessairement. Chaque faisceau 13a, 13b permet ainsi d'obtenir un nuage de points. Chaque nuage de points s'étend par exemple sur l'ensemble de la largeur de la tige 4, de sorte qu'il est possible de choisir un point notable, de même localisation, tel qu'un point milieu de la tige 4 ou un point sur un même bord de la tige 4, et de déterminer la droite reliant les deux points des deux nuages de points. Contrairement à la géométrie de l'anode 1 qui diffère d'une anode à une autre, la géométrie de la tige 4 est commune et stable d'une tige à l'autre, de sorte qu'il est possible de se servir d'un modèle afin de reconstruire une face de la tige 4 et d'identifier deux points permettant de repérer la direction A d'extension de la tige 4.

Les deux points notables sont identifiés dans le référentiel du système 13 de détermination qui est, selon l'exemple, le référentiel global X_{G}, Y_{G} et Z_{G}. Les deux faisceaux 13a, 13b sont synchronisés de sorte que les deux nuages de points sont pris simultanément, ou les deux faisceaux 13a, 13b sont horodatés de sorte que les deux nuages de points peuvent être corrélés temporellement.

En pratique, le système 13 de détermination du ballant peut obtenir des premiers nuages de points successifs par le premier faisceau 13a et des deuxièmes nuages de points successifs par le deuxième faisceau 13b pendant le défilement de l'anode 1. En corrélant temporellement les premiers nuages de points et les deuxièmes nuages de points, le système 13 de détermination du ballant détermine l'évolution du ballant tout au long du défilement de l'anode 1, dans le référentiel global X_{G}, Y_{G} et Z_{G}, sur une durée déterminée.

En variante, le système 13 de détermination du ballant peut comprendre un unique capteur de position et se baser sur la connaissance de la position du chariot de convoyage de l'anode 1 sur lequel la tige 4 est montée, de sorte que la position d'un premier point de la tige 4, par exemple son point d'accrochage sur le chariot, est connue par la position du chariot. Le système 13 de détermination détermine ensuite un deuxième point de la tige 4 grâce à un capteur de position, comme décrit précédemment. Le premier point est déterminé dans un référentiel lié au premier capteur du système 13 de détermination, tandis que le deuxième point est déterminé dans un référentiel lié au deuxième capteur. Le correcteur 14 peut alors ramener le premier point et le deuxième point dans un même référentiel commun, par exemple le référentiel global X_{G}, Y_{G} et Z_{G}.

En variante encore, le système 13 de détermination du ballant peut comprendre une ou plusieurs caméras traditionnelles qui acquièrent des images photographiques, par exemple pixellisées, successives d'au moins une portion de la tige 4 afin d'en déduire ses positions dans le temps et ainsi déterminer le ballant de la tige 4.

Pour obtenir la composante du ballant autour de l'axe horizontal sensiblement parallèle à la direction de déplacement par convoyage de l'anode, le système 13 de détermination du ballant comprend d'autres capteurs dont le champ de vision est incident sur au moins une face de la tige 4 sensiblement perpendiculaire à la direction de déplacement par convoyage de l'anode.

Le ballant Θ d'une part et les images prises par le capteur 11 de géométrie d'autre part sont à leur tour corrélés temporellement, de sorte que pour chaque image, c'est-à-dire pour chaque nuage de points de l'anode 1, du capteur 11 de géométrie à un instant donné, un ballant Θ correspondant peut lui être associé.

Le correcteur 14 associe donc, pour chaque image par le capteur 11 de géométrie à un instant donné, le ballant Θ à ce même instant donné. Le ballant peut avoir été mesuré à l'instant donné, ou être déduit par extrapolation à partir de la mesure du ballant à d'autres instants. Chaque image est alors ramenée depuis le référentiel global X_{G}, Y_{G} et Z_{G} dans un référentiel de référence, c'est-à-dire un référentiel corrigé indépendant du ballant, qui est par exemple le référentiel de l'anode, et est noté X_{Réf}, Y_{Réf}, Z_{Réf}.

Une image de l'anode 1 peut alors être reconstruite dans le référentiel de référence X_{Réf}, Y_{Réf}, Z_{Réf} pour en déterminer la géométrie.

Dans l'exemple décrit, seule une surface 2b latérale de l'anode 1 est balayée par le capteur 11 de géométrie, de sorte que l'image obtenue est une image bidimensionnelle de cette même surface 2b latérale. En pratique, le système 10 de caractérisation peut permettre d'obtenir une image tridimensionnelle de l'anode 1 complète. A cet effet, le système 10 de caractérisation comprend alors au moins deux capteurs 11 de géométrie, le champ 12 de vision de chaque capteur 11 de géométrie pouvant être incident sur au plus trois surfaces de l'anode 1. Le correcteur 14 corrige les images prises par chaque capteur 11 de géométrie dans le référentiel de référence X_{Réf}, Y_{Réf}, Z_{Réf}, et le système 15 de reconstruction reconstruit l'anode à partir de l'ensemble des images corrigées. Plus précisément, pour chaque capteur 11 de géométrie, il est par exemple déterminé la matrice de transformation du référentiel lié à chaque capteur 11 de géométrie dans un même référentiel global X_{G}, Y_{G} et Z_{G} afin d'y ramener les images de chaque portion d'anode. Puis, le correcteur 14 et le système 15 de reconstruction assurent la reconstruction d'une image de l'anode 1 complète dans le référentiel X_{Réf}, Y_{Réf}, Z_{Réf} de référence.

Une fois l'image de l'anode complète obtenue par reconstruction, des mesures peuvent être réalisée sur l'image de l'anode 1. Ces mesures permettent par exemple de mesurer le volume de l'anode 1 usée ou encore de déterminer le profil de la surface 2c inférieure usée. En complément, le système 10 de caractérisation peut comprendre un capteur de couleur afin par exemple de détecter des morceaux du bain électrolytique séché restant accrochés à l'anode 1 et de mesurer leur volume. Ces informations peuvent ensuite être utilisées par exemple afin d'ajuster les paramètres de fonctionnement des cuves d'électrolyse.

A titre d'exemple, pour reconstruire une anode 1 avec une précision suffisante pour effectuer des mesures, le nombre total de points utilisés est de l'ordre de 250000 par capteur 11 de géométrie.

Comme décrit ci-dessus, la reconstruction de l'anode par le système 10 de caractérisation est réalisée en ramenant l'image de chaque portion de l'anode dans le référentiel de référence, dans lequel le ballant est annulé avant de reconstruire complètement l'anode 1. Il n'y a pas par exemple de recalage des images de deux portions successives de l'anode puis de correction du ballant, car un recalage suppose de prendre une surface de référence sur l'anode 1. Or, l'anode 1, notamment sortant du bain électrolytique, présente sur ses surfaces des défauts très importants, non prédictibles, causés notamment par l'usure lors de la réaction d'électrolyse mais aussi par la manutention et par l'accrochage de bain électrolytique séché. Une méthode de recalage est donc inadaptée pour obtenir la précision requise. En corrigeant par le ballant chaque image de chaque portion avant de reconstruire l'anode complète, le système 10 de caractérisation est insensible aux défauts.

Le ou les capteurs 11 de géométrie selon l'exemple, et de préférence, sont des capteurs bidimensionnels, de moindres coûts que des capteurs tridimensionnels, et moins sensibles aux variations de luminosité. Toutefois, les capteurs 11 de géométrie peuvent également être des capteurs tridimensionnels lorsque les conditions le permettent, sans que cela ne change le principe du système 10 de caractérisation.

Ainsi, le système 10 de caractérisation permet de reconstruire une image complète d'une anode sans arrêter son mouvement de transport par le convoyeur, et avec une précision élevée, adaptée à la réalisation de mesures.

Le système 10 de caractérisation peut également être utilisé de manière similaire sur une anode non usée, par exemple pour comparer les mesures sur l'anode non usée avec les mesures sur l'anode usée. Il peut également être utilisé après le nettoyage de l'anode usée, c'est-à-dire après une étape dans laquelle le bain électrolytique séché est retiré, par exemple par grenaillage, afin de vérifier la qualité du nettoyage. En effet, l'anode usée peut être recyclée : descellée de la tige, elle est broyée et mélangée avec des matières fraiches pour la fabrication de nouvelles anodes. La présence de bain électrolytique peut alors poser problème pour les nouvelles anodes. Le système 10 de caractérisation permet de s'assurer que le nettoyage est suffisant.

Le système 10 de caractérisation peut également être utilisé sur les rondins 5 à l'extrémité de la tige 4 d'électrolyse, afin de déterminer leur dégradation par exemple à partir de la comparaison entre l'image des rondins reconstruite par le système 10 de caractérisation et un modèle, ou en effectuant des mesures directes sur l'image reconstruite par le système 10 de caractérisation. L'utilisation du système 10 de caractérisation sur les rondins 5 permet d'optimiser l'utilisation des tiges 4. En effet, une fois l'anode usée descellée de la tige 4, les rondins 5 sont nettoyés, par exemple par grenaillage, et la tige 4 a vocation à être réutilisée. Toutefois, les rondins 5 s'endommagent, de sorte qu'il est en général prévu un contrôle visuel pour le cas échéant envoyer la tige au rebut ou de la réparer. En déterminant les dégradations, il est alors possible d'établir si la tige 4 peut être réutilisée ou inversement qu'elle doit être réparée. Il est également possible d'anticiper qu'une tige ne pourra pas être réutilisée. La gestion des stocks des tiges s'en trouve améliorée.

Le système 10 de caractérisation est intégré selon l'invention au sein de l'installation 100 de production d'aluminium afin d'améliorer son fonctionnement, l'étendue de l'invention étant définie par les revendications 1 à 14. L'installation selon l'invention est revendiquée dans les revendications 1 à 12 tandis que le procédé selon l'invention est défini dans les revendications 13 et 14.

## Revendications

1. Installation (**100**) de production d'aluminium par électrolyse comprenant un système (**10**) de caractérisation d'une géométrie d'une charge (**1**) en mouvement suspendue au moyen d'une tige (**4**), le système comprenant :
- au moins un capteur (**11**) de géométrie présentant un champ de vision dans lequel la charge (**1**) est apte à défiler, le champ (**12**) de vision du capteur (**11**) de géométrie étant apte à englober une portion de la charge (**1**) à un instant donné de manière à fournir une image de la géométrie de la portion à l'instant donné ;
- un système (**13**) configuré pour déterminer le ballant (**Θ**) de la tige (**4**) et/ou de la charge (**1**) à l'instant donné ;
- un correcteur (**14**) configuré pour corriger, à l'instant donné, l'image de la géométrie de la portion de la charge (**1**) corrigée par le ballant (**Θ**) correspondant, de manière à définir l'image de la géométrie de la portion dans un référentiel de référence, indépendant du ballant (**Θ**) ;
- un système (**15**) configuré pour reconstruire a géométrie d'au moins une partie de la charge (**1**) dans le référentiel de référence, à partir de l'image de la géométrie corrigée d'au moins deux portions de la charge (**1**) à deux instants donnés,
l'installation (**100**) comprenant un ensemble de convoyage de charges sur un convoyeur aérien comprenant un dispositif de liaison tel que la charge (**1**) peut être suspendue audit dispositif de liaison par une tige (**4**).

2. Installation (**100**) selon la revendication 1, dans laquelle le système (**10**) comprend au moins deux capteurs (11) de géométrie, le champ (**12**) de vision de chaque capteur (**11**) de géométrie étant apte à englober une portion de la charge (**1**) à un instant donné, et le champ (**12**) de vision de chaque capteur (**1**) étant distinct l'un de l'autre au moins en partie.

3. Installation **(100)** selon la revendication 2, dans laquelle le système **(10)** comprend au moins trois capteurs (**11**) de géométrie.

4. Installation **(100)** selon la revendication 2 ou la revendication 3, dans laquelle au moins un capteur (**11**) de géométrie est un capteur bidimensionnel.

5. Installation **(100)** selon la revendication 4, dans laquelle au moins un capteur (**11**) de géométrie est un capteur laser à balayage.

6. Installation **(100)** selon l'une quelconque des revendications précédentes, dans laquelle au moins un capteur (**11**) de géométrie est un capteur tridimensionnel.

7. Installation **(100)** selon l'une quelconque des revendications précédentes, dans laquelle le système **(10)** comprend un capteur de couleurs.

8. Installation **(100)** selon l'une quelconque des revendications précédentes, dans laquelle le système **(13)** de détermination du ballant (**Θ**) comprend au moins un capteur de position (X) d'au moins un premier point de la tige (**4**) dans un premier référentiel et d'au moins un second point, distinct du premier point, de la tige dans un deuxième référentiel, le premier point et le deuxième point étant décalés l'un de l'autre dans la direction (A) d'extension de la tige (**4**), le correcteur **(14)** étant configuré pour ramener les deux points de la tige (**4**) dans le référentiel de référence.

9. Installation **(100)** selon la revendication 8, dans laquelle le au moins un capteur de position (X) est apte à déterminer la position d'un dispositif de liaison auquel la tige (4) est suspendue, la position du premier point de la tige étant déterminée par la position dudit dispositif de liaison.

10. Installation **(100)** selon la revendication 8 ou la revendication 9, dans laquelle le au moins un capteur de position est un capteur bidimensionnel.

11. Installation **(100)** selon l'une quelconque des revendications précédentes, dans laquelle la charge (**1**) comprend un bloc carboné pour l'électrolyse de l'aluminium.

12. Installation **(100)** selon l'une quelconque des revendications précédentes, dans laquelle la charge (**1**) comprend des rondins (**5**) de scellement pour au moins un bloc carboné utilisé pour l'électrolyse de l'aluminium.

13. Procédé de détermination d'une géométrie d'une charge (**1**) en mouvement suspendue au moyen d'une tige (**4**) à l'aide d'un système **(10)** de caractérisation d'une installation **(100)** selon l'une quelconque des revendications précédentes, la charge (**1**) étant en défilement vis-à-vis du système **(10)** de détermination, le procédé comprenant :
- l'enregistrement d'au moins une image de la géométrie d'une première portion de la charge (**1**) ;
- la mesure du ballant (**Θ**) de la charge (**1**) ;
- la correction de l'image de la géométrie enregistrée par le ballant (**Θ**) afin d'obtenir l'image de la géométrie de la première portion de la charge dans un référentiel (X_{Réf}, Y_{Réf}, Z_{Réf}) de référence, indépendant du ballant (**Θ**) ;
- répétition des étapes de détection, de mesure et de correction pour au moins une deuxième portion de la charge (**1**) ;
- la reconstruction d'une image de la géométrie d'au moins une partie de la charge (**1**) à partir des images de la géométrie pour les au moins deux portions de la charge (**1**) ramenées dans le référentiel (X_{Réf}, Y_{Réf}, Z_{Réf}) de référence.

14. Procédé selon la revendication 13, dans lequel l'étape de reconstruction est réalisée pour l'ensemble de la charge (**1**) à partir d'une pluralité d'images de la géométrie pour une pluralité de portions de la charge.

## Patentansprüche

1. Installation (100) zur Herstellung von Aluminium durch Elektrolyse, umfassend ein System (10) zur Charakterisierung einer Geometrie einer Last (1) in Bewegung, die mittels einer Stange (4) aufgehängt ist, wobei das System umfasst:
- mindestens einen Geometrie-Sensor (11) mit einem Sichtfeld, in dem die Last (1) sich vorbeibewegen kann, wobei das Sichtfeld (12) des Geometrie-Sensors (11) dazu geeignet ist, zu einem bestimmten Zeitpunkt einen Abschnitt der Last (1) zu umfassen, um ein Bild der Geometrie des Abschnitts zum gegebenen Zeitpunkt zu liefern;
- ein System (13), das dazu konfiguriert ist, das Pendeln (Θ) der Stange (4) oder/und der Last (1) zum gegebenen Zeitpunkt zu bestimmen;
- eine Korrektureinrichtung (14), die dazu konfiguriert ist, zu dem gegebenen Zeitpunkt das Bild der Geometrie des Abschnitts der Last (1) zu korrigieren, korrigiert um das entsprechende Pendeln (Θ), um das Bild der Geometrie des Abschnitts in einem Referenz-Bezugssystem zu definieren, das unabhängig von dem Pendeln (Θ) ist;
- ein System (15), das dazu konfiguriert ist, die Geometrie von mindestens einem Teil der Last (1) im Referenz-Bezugssystem zu rekonstruieren, ausgehend von dem Bild der korrigierten Geometrie von mindestens zwei Abschnitten der Last (1) zu zwei gegebenen Zeitpunkten,
wobei die Installation (100) eine Förderanordnung für Lasten an einem Hängeförderer umfasst, mit einer Verbindungseinrichtung, so dass die Last (1) an der Verbindungseinrichtung mit einer Stange (4) aufgehängt werden kann.

2. Installation (100) nach Anspruch 1, wobei das System (10) mindestens zwei Geometrie-Sensoren (11) umfasst, wobei das Sichtfeld (12) jedes Geometrie-Sensors (11) dazu geeignet ist, einen Abschnitt der Last (1) zu einem gegebenen Zeitpunkt zu umfassen, und das Sichtfeld (12) jedes Sensors (1) zumindest teilweise voneinander verschieden ist.

3. Installation (100) nach Anspruch 2, wobei das System (10) mindestens drei Geometrie-Sensoren (11) umfasst.

4. Installation (100) nach Anspruch 2 oder Anspruch 3, wobei mindestens ein Geometrie-Sensor (11) ein zweidimensionaler Sensor ist.

5. Installation (100) nach Anspruch 4, wobei mindestens ein Geometrie-Sensor (11) ein Abtast-Lasersensor ist.

6. Installation (100) nach einem der vorhergehenden Ansprüche, wobei mindestens ein Geometrie-Sensor (11) ein dreidimensionaler Sensor ist.

7. Installation (100) nach einem der vorhergehenden Ansprüche, wobei das System (10) einen Farbsensor umfasst.

8. Installation (100) nach einem der vorhergehenden Ansprüche, wobei das System (13) zum Bestimmen des Pendelns (Θ) mindestens einen Positionssensor (X) für mindestens einen ersten Punkt der Stange (4) in einem ersten Bezugssystem und für mindestens einen zweiten Punkt der Stange in einem zweiten Bezugssystem umfasst, der sich vom ersten Punkt unterscheidet, wobei der erste Punkt und der zweite Punkt in der Erstreckungsrichtung (A) der Stange (4) gegeneinander versetzt sind, und wobei die Korrektureinrichtung (14) dazu konfiguriert ist, die beiden Punkte der Stange (4) zurück in das Referenz-Bezugssystem zu bringen.

9. Installation (100) nach Anspruch 8, wobei der mindestens eine Positionssensor (X) dazu in der Lage ist, die Position einer Verbindungseinrichtung zu bestimmen, an der die Stange (4) aufgehängt ist, wobei die Position des ersten Punktes der Stange durch die Position der Verbindungseinrichtung bestimmt ist.

10. Installation (100) nach Anspruch 8 oder Anspruch 9, wobei der mindestens eine Positionssensor ein zweidimensionaler Sensor ist.

11. Installation (100) nach einem der vorhergehenden Ansprüche, wobei die Last (1) einen kohlenstoffhaltigen Block zur Elektrolyse von Aluminium umfasst.

12. Installation (100) nach einem der vorhergehenden Ansprüche, wobei die Last (1) Rundstücke (5) zum Vergießen für wenigstens einen kohlenstoffhaltigen Block umfasst, der für die Elektrolyse von Aluminium verwendet wird.

13. Verfahren zum Bestimmen einer Geometrie einer Last (1) in Bewegung, die mittels einer Stange (4) aufgehängt ist, mit Hilfe eines Systems (10) zur Charakterisierung einer Installation (100) gemäß einem der vorhergehenden Ansprüche; wobei die Last (1) sich an dem System (10) zur Bestimmung vorbei bewegt, wobei das Verfahren umfasst:
- die Aufzeichnung mindestens eines Bildes der Geometrie eines ersten Abschnitts der Last (1);
- die Messung des Pendelns (Θ) der Last (1);
- die Korrektur des aufgezeichneten Bildes der Geometrie um das Pendeln (Θ), um das Bild der Geometrie des ersten Abschnitts der Last in einem Referenz-Bezugssystem (X_{Ref}, Y_{Ref}, Z_{Ref}) zu erhalten, das unabhängig von dem Pendeln (Θ) ist;
- Wiederholung der Schritte der Erfassung, der Messung und der Korrektur für mindestens einen zweiten Abschnitt der Last (1);
- die Rekonstruktion eines Bildes der Geometrie von mindestens einem Teil der Last (1), ausgehend von Bildern der Geometrie für die mindestens zwei Abschnitte der Last (1), die in das Referenz-Bezugssystem (X_{Ref}, Y_{Ref}, Z_{Ref}) zurückgebracht wurden.

14. Verfahren nach Anspruch 13, wobei der Schritt der Rekonstruktion für die Anordnung der Last (1) ausgehend von mehreren Bildern der Geometrie für mehrere Abschnitte der Last ausgeführt wird.

## Claims

1. A facility (100) for producing aluminium by electrolysis comprising a system (10) for characterising a geometry of a moving load (1) suspended by means of a rod (4), the system comprising:
- at least one geometry sensor (11) having a field of vision wherein the load (1) is able to travel, the field (12) of vision of the geometry sensor (11) being able to encompass a portion of the load (1) at a given instant so as to provide a geometry image of the portion at the given instant;
- a system (13) configured to determine the swing (Θ) of the rod (4) and/or of the load (1) at the given instant;
- a corrector (14) configured to correct at the given instant, the geometry image of the load portion (1) corrected by the corresponding swing (Θ), so as to define the geometry image of the portion in a reference frame, independent of the swing (Θ);
- a system (15) configured to reconstruct the geometry of at least one part of the load (1) in the reference frame, based on the image of the corrected geometry of at least two portions of the load (1) at two given instants,
the facility (100) comprising a load conveying assembly on an overhead conveyor comprising a connection device such that the load (1) can be suspended from said connection device by a rod (4).

2. The facility (100) according to claim 1, wherein the system (10) comprises at least two geometry sensors (11), the field of vision (12) of each geometry sensor (11) being able to encompass a portion of the load (1) at a given instant, and the field (12) of vision of each sensor (1) being at least partially distinct from one another.

3. The facility (100) according to claim 2, wherein the system (10) comprises at least three geometry sensors (11).

4. The facility (100) according to claim 2 or claim 3, wherein at least one geometry sensor (11) is a two-dimensional sensor.

5. The facility (100) according to claim 4, wherein at least one geometry sensor (11) is a scanning laser sensor.

6. The facility (100) according to any one of the preceding claims, wherein at least one geometry sensor (11) is a three-dimensional sensor.

7. The facility (100) according to any one of the preceding claims, wherein the system (10) comprises a colour sensor.

8. The facility (100) according to any one of the preceding claims, wherein the system (13) for determining the swing (Θ) comprises at least one sensor (X) of the position of at least one first point of the rod (4) in a first reference frame and of at least one second point, distinct from the first point, of the rod in a second reference frame, the first point and the second point being offset from each other along the direction (A) of extension of the rod (4), the corrector (14) being configured to bring the two points of the rod (4) back into the reference frame.

9. The facility (100) according to claim 8, wherein the at least one position sensor (X) is capable of determining the position of a connection device from which the rod (4) is suspended, the position of the first point of the rod being determined by the position of said connection device.

10. The facility (100) according to claim 8 or claim 9, wherein the at least one position sensor is a two-dimensional sensor.

11. The facility (100) according to any one of the preceding claims, wherein the load (1) comprises a carbonaceous block for the aluminium electrolysis.

12. The facility (100) according to any one of the preceding claims, wherein the load (1) comprises sealing logs (5) for at least one carbonaceous block used for the aluminium electrolysis.

13. A method for determining the geometry of a moving load (1) suspended by means of a rod (4) using a system (10) for characterising an installation (100) according to any one of the preceding claims, the load (1) is travelling relative to the determination system (10), the method comprising:
- recording at least one geometry image of a first portion of the load (1);
- measuring the swing (Θ) of the load (1);
- correcting the geometry image recorded by the swing (Θ) in order to obtain the geometry image of the first portion of the load in a reference frame (X_{Ref}, Y_{Ref}, Z_{Ref}), independent of the swing (Θ);
- repeating the detection, measurement and correction steps for at least one second portion of the load (1);
- reconstructing a geometry image of at least one part of the load (1) based on the geometry images for the at least two portions of the load (1) brought back into the reference frame (X_{Ref}, Y_{Ref}, Z_{Ref}).

14. The method according to claim 13, wherein the reconstruction step is carried out for the entire load (1) based on a plurality of geometry images for a plurality of portions of the load.
